**Europäisches Patentamt**

**(19) European Patent Office**

**Office européen des brevets**

(11) Publication number : **0 415 684 B1**

# (12) EUROPEAN PATENT SPECIFICATION

(45) Date of publication of patent specification :
15.12.93 Bulletin 93/50

(21) Application number : 90309353.2

(22) Date of filing : 24.08.90

(51) Int. Cl.$^5$ : **B60C 3/04,** B60C 11/00,
B29D 30/24

(54) **High speed tyre for heavy load.**

(30) Priority : 28.08.89 JP 221192/89

(43) Date of publication of application :
06.03.91 Bulletin 91/10

(45) Publication of the grant of the patent :
15.12.93 Bulletin 93/50

(84) Designated Contracting States :
DE FR GB

(56) References cited :
EP-A- 0 296 093
EP-A- 0 331 453
DE-A- 3 614 764
DE-C- 3 611 222
FR-A- 2 354 874
GB-A- 2 042 429

(73) Proprietor : **SUMITOMO RUBBER INDUSTRIES
LIMITED**
**1-1 Tsutsuicho 1-chome Chuo-ku**
**Kobe-shi Hyogo-ken (JP)**

(72) Inventor : **Ueyoko, Kiyoshi**
**2-10-2 Fukau-minami, Higashinari-ku**
**Osaka-shi, Osaka-fu (JP)**
Inventor : **Oda, Kazuo**
**39 Nigawadai**
**Takarazuka-shi, Hyogo-ken (JP)**

(74) Representative : **Stewart, Charles Geoffrey**
**SP TYRES UK LIMITED Tyre Technical
Division**
**Fort Dunlop, Erdington, Birmingham B24 9QT
(GB)**

EP 0 415 684 B1

## Description

This invention relates to a high-speed tyre for heavy load that has improved high-speed durability by increasing the belt cord tension in the tread shoulder parts of the finished tyre after vulcanisation moulding, and can be preferably employed, specifically, as a tyre for aircraft.

Such tyres for aircraft are now commonly of radial structure with belt layers comprising belt cords inclined at an angle of 0 to 90 degrees to the tyre's equator outside a radial carcass to maintain the proper shape of the tread surface and resist shocks from the ground under conditions of high pressure and heavy load.

Such belt layers, conventionally, have been formed by wrapping one after the other single sheets of material each including belt reinforcement cords and cut to the required length and width on to a drum former or directly by wrapping onto a carcass which is pre-inflated with an appropriate internal pressure. In both cases the belt layers have a wide sectional width in order to obtain the required belt effect in the finished tyre.

In the case where single sheet materials having such a full width are positioned in a curved carcass line having a crown shape in moulding a raw tyre or in the vulcanisation process, however, in the shoulder parts of the belt layer, slackness is caused due to the difference between the circumferential length in the shoulder part and that in the central part and, as a result, when a tyre having such a belt structure is inflated with internal pressure, the slackness causes such heterogeneity that the tension of belt layer cords in the shoulder parts is smaller than the tension in the central part.

This causes critical structural damage specifically in a radial tyre for aircraft which take off and land at high speeds such as approximately 370 km/h. When a tyre reaches that speed in a short time under conditions of heavy load, for example, the so-called lifting in which the belt end is deformed outwardly in the radial direction of the tyre occurs in the shoulder parts where the belt tension is relatively small due to the centrifugal force applied to the tread. This leads to the occurrence of ply separation, and the critical speed at which the standing wave phenomenon occurs is reduced as well. The standing wave effect also increases the strain in the belt edge as well as significantly reducing the durability by exciting the bead parts through the sidewalls. It is widely known that the standing wave in a radial tyre can be obtained by the following formula (1):

$$Vc = \sqrt{T/m} + 2x\sqrt{EIxK/m} \quad (1)$$

where

Vc: critical speed generating standing wave

m: mass of unit length in tread part

EI: bending rigidity in tyre's surface in tread part

T: belt tension

k: spring constant of carcass.

The formula (1) has been obtained by supposing that the belt layer is an endless beam supported elastically by the carcass, and it can be seen that the critical speed Vc for the generation of the standing wave is increased by reducing the mass m and increasing the rigidity EI, belt tension T and spring constant k of carcass.

Here, in order to increase the critical speed of generating the standing wave without reducing the mass m the parts of the tyre with less belt tension should be strengthened.

It is hence a primary object of the invention to provide a high-speed tyre for heavy load that is improved in high-speed durability by means of controlling the lifting at the belt edges in high-speed driving and increasing the critical speed of the standing wave.

According to the present invention a high-speed tyre for heavy load comprises a carcass composed of at least one carcass ply having carcass cords inclined at an angle of 75 to 90 degrees to the tyre's equator and extending from a tread through side walls and folded at each edge around a bead core of a bead region and a belt layer composed of a plurality of belt plies having belt cords inclined at an angle of 0 to 5 degrees to the tyre's equator and disposed radially outside said carcass, characterised in that the difference between the raw belt middle diameter DB1 defined as the inner diameter of the unvulcanised raw belt layer at the tyre's equator on a former and the raw belt edge diameter DA1 defined as the inner diameter of the unvulcanised raw belt layer at its edge part on the former, that is, the inner diametral difference DB1-DA1 of the raw belt layer is positive; the inner diametral difference DB1-DA1 is 0.04 times to 0.3 times the belt width W which is a linear width of the belt layer in the direction of the tyre's axis; the difference between the belt middle diameter DB2 defined as the inner diameter of the belt layer at the tyre's equator in the state where a tyre formed through vulcanisation moulding using said raw belt layer is mounted on its specified rim and inflated with an internal pressure of 0.5kg/cm² and the belt edge diameter DA2 defined as the inner diameter of the belt layer at its edge part in said state, that is, the inner diametral difference DB2-DA2 of the belt layer is positive; and the ratio of the inner diametral difference DB1-DA1 to the inner diametral difference DB2-DA2, that is, (DB1-DA1)/(DB2-DB2) is 0 to 2.0.

By setting the inner diametral difference of the raw belt layer on a former to be more than the inner diametral difference of the belt layer in the finished tyre inflated to 0.5kg/cm$^2$, the belt cords in the shoulder parts are stretched in circumferential length corresponding to the difference between the inner diametral difference of the raw belt layer in the finished tyre in comparison with the belt cords in the central part, and thus the tensile force is increased. As a result, the tension in the belt end is increased and the lifting in the edge region is controlled, separation of the belt plies is reduced, the critical speed of standing wave generation is increased and thus, structural damage both in the tread and the bead parts is remarkably reduced and the high-speed durability is improved.

An embodiment of the present invention will new be described, by way of example, referring to the attached diagrammatic drawings, in which:

Figure 1 is a sectional view of one embodiment of the invention;

Figure 2 is a sectional view of a raw belt formed on a former;

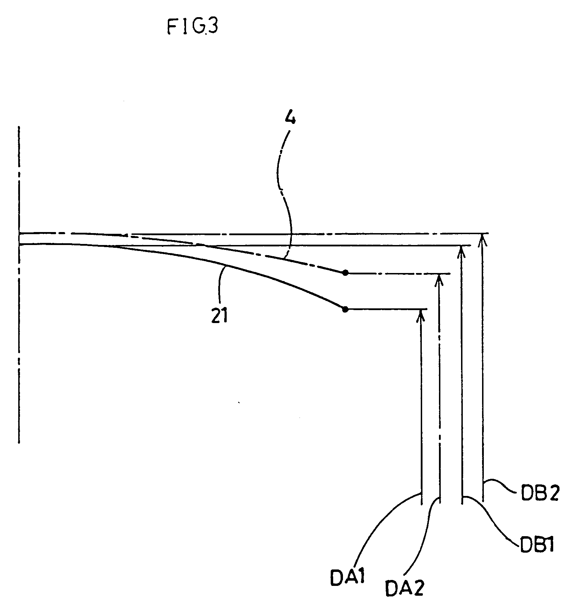

Figure 3 is a schematic diagram showing the profile of the belt layer of the finished tyre as well as the profile of the raw belt on a former;

Figures 4(a) to (b) show cord properties;

Figure 5 is a graph of the initial elasticity;

Figure 6 is a sectional view schematically of a belt layer of another embodiment;

Figure 7 is a sectional view of the raw belt of Figure 6; and

Figures 8 and 9 are sectional views showing the raw belts of still other embodiments.

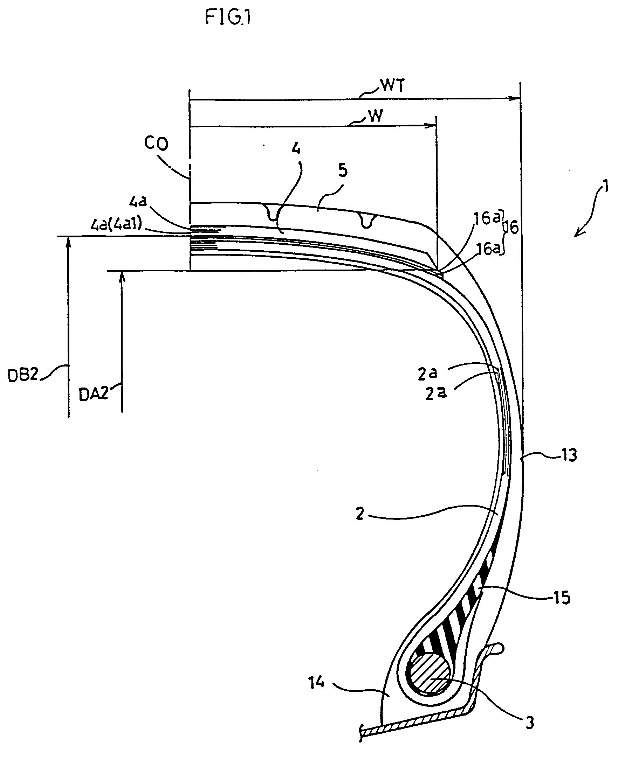

The tyre shown in Figure 1 is a 46 x 17R20 aircraft radial tyre. The tyre is mounted on its specified rim and filled with an internal pressure of 0.5kg/cm$^2$.

The tyre 1 comprises a carcass 2 extending from a tread 5 through sidewalls 13 to bead regions 14 and folded over around bead cores 3 from the inside to the outside of the tyre and a belt layer 4 placed on the outside of the carcass 2.

The carcass 2 is composed of a plurality, here six carcass plies 2a. The carcass cords are aligned to the radial direction at an angle of 75 to 90 degrees to the tyre's equator. The carcass 2 has a triangular structure with the carcass cords of adjoining carcass plies 2a substantially in the radial direction of the tyre but mutually crossed to improve the side rigidity of the tyre.

A tapered bead apex 15 made of hard rubber extends in the radial direction of the tyre between the main part and the folded-over part of the carcass 2 above the bead core 3 to improve the tyre's rigidity between the bead 14 and the sidewalls 13 and to scatter the stress caused by any slack in the folded-over part of the carcass 2. A chafer (not shown) may be employed in the outer surface of the bead 14 to prevent chafing or displacement on the rim.

In addition, a belt layer 4 comprising plural plies 4a in which belt cords 6 are aligned at an inclination of 5 degrees or less to the tyre's equator CO is positioned under the tread 5 and outside the carcass 2 in the radial direction. The belt layer 4 includes a cut breaker 16 between the innermost belt ply 4a1 and the carcass 2. The said cut breaker 16 has supplemental cords aligned at an angle of 5 to 40 degrees to the tyre's equator CO.

The belt layer 4 is composed of eight plies 4a in the embodiment and is formed approximately in a pedestal shape in the sectional plane including the tyre's axis by gradually reducing the width of the successive belt plies 4a outwardly in the radial direction so that the edge of the belt is inclined similarly to the outer surface of the buttress. The belt width W, which is the linear width of belt layer 4 in the direction of the tyre's axis, that is, the linear width of the belt ply 4a1 with the widest width is set in the range of approximately 75 to 85% of the tyre's entire width WT to reinforce substantially the full width of the tread 5 and provide a hoop effect, improve wear resistance, rolling characteristics and the like and increase the shock resistance to take-off and landing.

The rigidity of the tread in the direction of the tyre width which is reduced due to the inclination of the belt cords of the belt ply 4a at an angle of 5 degrees or less to the tyre's equator CO is reinforced by a cut breaker 16.

Two cut breaker plies 16a in which supplemental cords are inclined at an angle of 5 degrees to 40 degrees to the tyre's equator CO comprise the cut breaker 16. The supplemental cords of one ply 16a are arranged in the opposite direction of the cords of the other ply 16a to mutually cross. Both plies 16a are along the outer shape of the carcass 2 with their outer edges terminated outside the outer edges of the belt ply 4a1. Thus, the cut breaker 16 forms a strong triangular structure with the supplemental cords, the belt cords and carcass cords to improve the in-surface bending strength and increase the cornering force of the tread 5. The edges of the cut breaker 16 may be terminated at the outer edge of the belt ply 4a1 or inside it and may be formed radially outside the outermost belt ply 4a2.

The belt layer 4 has the profile of an exact crown shape in which the inner diametral difference DB2-DA2 is positive, in other words the belt middle diameter DB2 when the tyre is inflated on a rim to 0.5kg/cm$^2$ as shown in Figure 1 is bigger than the belt edge diameter DA2. Therefore, in the prior art case tyre when the belt ply 4a that forms the belt layer 4 comprises a single sheet of materials as in a conventional ply, the tension in the shoulder part of the belt layer 4 is lower than that in the central part due to the inner diametral difference DB2-DA2.

However, in the case of the tyre 1 of the invention, the tensile force in the shoulder part is increased and the apparent rigidity is improved by previously applying a higher stretch to the belt cords 6 in the shoulders in comparison with the belt cord 6 in the central part in the finished tyre at an internal pressure state of 0.5kg/cm$^2$.

In order to achieve such a structure, it is required at least to extend the belt cord 6 in the shoulder part continuously in the circumferential direction, and the belt plies 4a of the embodiment are formed by continuously winding one or a plurality of rubber coated belt cords 6 from one of the shoulder parts to the other spirally at an inclination of 5 degrees or less to the tyre's equator CO. The belt plies 4a may be formed comprehensively by a continuous belt cord 6 as a whole by folding the winding belt cords 6 over one of the shoulder parts and sequentially winding them to be superimposed on one another, and it is preferable to mutually cross the adjoining belt cords 6 in the radial direction.

A new manufacturing method is employed to apply the stretch to such belt cords 6.

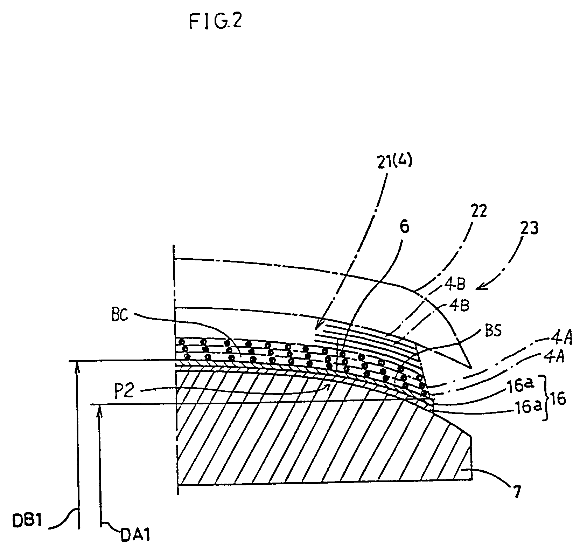

In other words, as shown in Figure 2, the raw belt 21 for the formation of the belt layer 4 is formed by spirally winding the belt cord 6 on the former 7 with a homogeneous tensile force. Then a tread/belt laminate 23 is priorly moulded by winding a tread rubber 22 in a belt shape for the formation of tread 5 on the outer circumference of the raw belt 21. The laminate 23 is next removed from the former 7 with reduced diameter, transferred to the moulding drum for the taw tyre, and set on the carcass 2 shaped toroidally on the moulding drum to make a raw tyre. A higher stretch is applied to the belt cord 6 in the shoulder parts by the internal moulding pressure applied in the moulding of the raw tyre or the vulcanisation moulding according to the following process.

To obtain an appropriate stretch, the inner diametral difference DB1-DA1 of the raw belt layer, that is the difference between the raw belt middle diameter DB1 which is the inner diameter on the tyre's equator and the raw belt edge diameter DA1 which is the inner diameter at the edge part should be positive. Its ratio (DB1-DA1)/(DB2-DA2) to the inner diametral difference DB2-DA2 should be 0 to 2.0. Further, the inner diametral difference DB1-DA1 is set at 0.04 times to 0.3 times the belt width W.

If however, the ratio (DB1-DA1)/(DB2-DA2) exceeds 2.0, or the inner diametral difference DB1-DA1 is more than 0.3 times the belt width W, the stretch of the belt cords 6 in shoulder parts becomes excessive in comparison with the stretch in the central part, and, as a result, the alignment of belt cords in the shoulder parts becomes irregular when the moulding internal pressure is applied and so the durability and homogeneity of the tyre are significantly deteriorated. On the other hand, if the ratio (DB1-DA1)/(DB2-DA2) is less than 0, or the inner diametral difference DB1-DA1 is less than 0.04 times the belt width W, as the stretch of belt cord 6 in the shoulder parts, that is, the tensile force is then insufficient, it is difficult to obtain the lifting control effect and again the desired advantages are not obtained.

In the case when both the inner diametral differences DB2-DA2 and DB1-DA1 are negative, the ground contact performance of the central part of the tread is inferior, the grip performance and the wear resistance are reduced, and, as the ground contact pressure of the shoulder parts increases, the structural durability such as the belt edge breakage are deteriorated.

As a cut breaker 16 is employed inside the innermost belt ply 4a1 slip between the belt cord 6, which is wound spirally, and the former 7 is prevented, the drive number of belt cords 6 and finishing of the belt cord edge can be easily controlled, and the fabrication efficiency and product quality of the tyre is remarkably improved.

The carcass cords, belt cords 6 and supplemental cords are now described in succession.

As a carcass cord, an elastic cord having high elasticity is used.

The stretch $S_5$ (%) of the elastic cord when loaded with 5kg of load should be 5 to 10 (preferably between 5 and 8). Moreover, the stretch $S_{10}$ (%) when loaded with 10kg load should be 9 to 15 (preferably between 10 and 12), and the stretch $S_{20}$ (%) when loaded with 20kg load should be 14 to 20.

In the other embodiment, the divided value $D_5$ of stretch $S_5$ of the carcass cord when loaded with 5kg load divided by the actual total denier number of the cord is set at 7.35 x 10$^{-4}$ to 14.7kg x 10$^{-4}$.

The divided value $D_{10}$ of stretch $S_{10}$ when loaded with 10kg load and the divided value $D_{20}$ of stretch $S_{20}$ when loaded with 20kg load divided by the actual total denier number of the cord are set at 13.2 x 10$^{-4}$ to 22.1 x 10$^{-4}$ and 20.6 x 10$^{-4}$ to 29.4 x 10$^{-4}$ respectively.

Here, the actual total denier number of the cord is measured by:

  * sampling a sample by applying initial load to the cord so that its total length comes to be 9m or more;
  * measuring its mass, leaving it for two hours in a dryer at a temperature of 105 ± 2 degrees C, obtaining its absolute dry mass after qrdrying it to constant weight, and calculating the fineness based on corrected weight.

$$\text{Actual total denier number d} = \frac{W'\text{x}9000 \times (1 + \frac{Rc}{100})}{\ell}$$

W':     absolute dry mass of sample
Rc:     official moisture regain (nylon 4.5%)
$\ell$:     length of cord sample

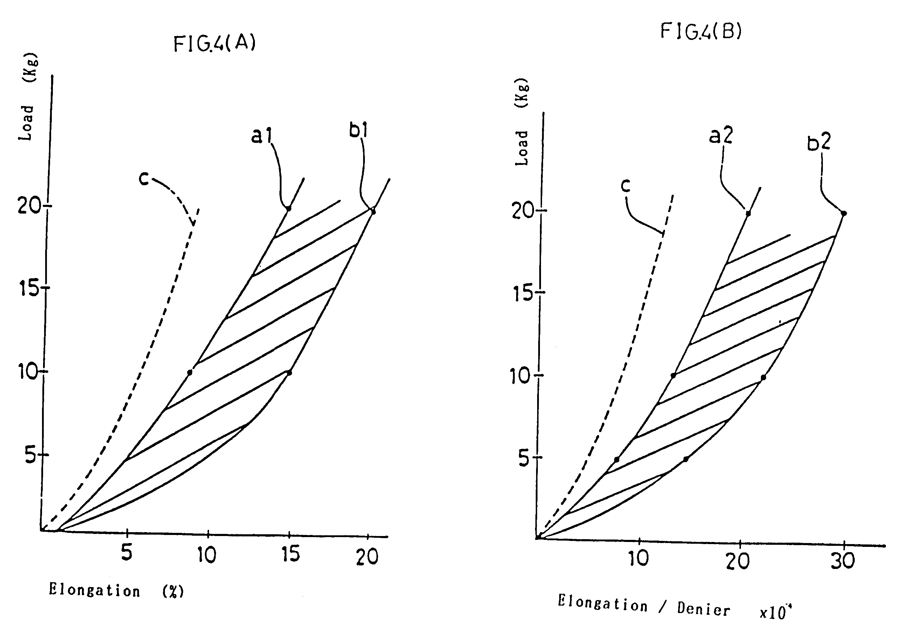

Such elastic cord has characteristics in a range between the lower limit curves a1 and a2 and the higher limit curves b1 and b2 in Figures 4(a) and 4(b). As shown by the curves (a) and (b) (combining (a1) and (a2) to generally call (a) and (b1) and (b2) to generally call (b)), the stretch of elastic cord increases with lighter load, and it has such a characteristic that the stretchability is reduced as the load is increased.

The carcass cord is stretched more when the tyre is inflated with the moulding internal pressure, the belt cord is elongated, and the tyre can be made as specified by using an elastic cord having such a characteristic.

In addition, when the load is increased to 10kg and 20kg, although the carcass cord is elongate according to the increase of load, as the stretchability gradually reduces, deformation of the tyre in use can be controlled.

A conventional cord as shown by curve (c) stands up more in comparison with the curve (a) approximately to form a straight line, and in the case of using such conventional cord, as the stretch of the carcass cord is smaller even by inflating with a moulding internal pressure, a sufficient tension can not be applied to the belt cord, and conversely the deformation rate is increased in use of the tyre, the durability and running performance are deteriorated.

As the elastic cord, in comparison, has characteristics in the range between curves (a) and (b), it can improve the tyres durability.

The conditions of $S_5$, $S_{10}$ and $S_{20}$ when applying 5kg, preferably 10kg and 20kg, respectively, specify the values of stretch itself of the cord by the specified loads, regardless of the actual total denier number of carcass cord in use. On the other hand, the other condition specifies the divided value of the stretch $S_5$ when 5kg of load is applied by the actual total denier number, thus specifying the stretchability per denier of cord when 5kg load is applied, which, therefore, specifies the carcass cord mainly from the aspect of characteristic of cord, and is employed, for this reason, in a wide range of high-speed tyres for heavy load such as tyres for aircraft to designate the stretch when a specified load is employed. The former specified the value that can be preferably employed mainly in tyres for aircraft, specifically tyres for large-size jets.

The initial elasticity $E_s$ (kg/mm$^2$) of the elastic cord is set at 130 or more (preferably 140 or more) and 200 or less.

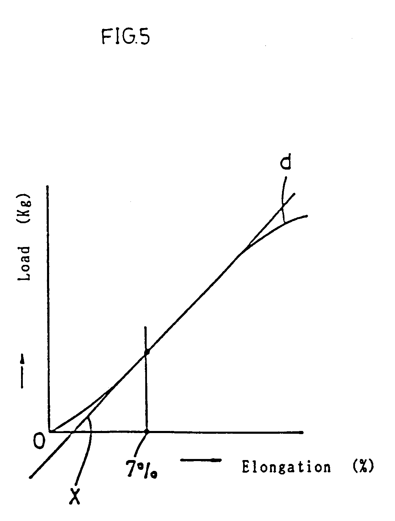

The initial elasticity $E_s$ (kg/mm$^2$) is, as shown in Figure 5, defined as the inclination of a tangent X to the curve (d) at 7% stretch, when the curve (d) of load (kg) and stretch (%) is drawn by using a tensile tester of the constant stretch rate type. By setting the initial elasticity $E_s$ (kg/mm$^2$) smaller within the range in comparison with a conventional elastic cord, the stretchability of the elastic cord is improved in applying stretch to the carcass cord.

Moreover, an elastic cord having load at breakage, that is the cord strength, of 30kg or more, preferably about 40kg to 60kg is used.

Furthermore, a combined cord comprising one or more types of nylon cord, polyester cord, aromatic polyamide cord, carbonic cord and metallic cord is used for the elastic cord.

When an organic fibre cord is used, a cord having the required physical characteristics can be obtained by significantly reducing the tension in the so-called dip stretch process where tension and heat are priorly applied for specified times compared with the tension used in the conventional dip stretch process. In the case of using a nylon cord, for example, to provide the characteristics, the number of twists per 10cm is increased to 26 to 36 T/10 cm from the conventional number of twists of approximately 23 T/10 cm. By combining cords having smaller stretchability with those having larger stretchability, and employing a slackness by priorly coiling the cords having smaller stretchability or the like, the cord can be formed in such a manner that when the load reaches a specified value, the cords having smaller stretchability bear the load to reduce the total stretch rate of cord.

The belt cord 6 should have the same stretch characteristic as the carcass cord with a stretch $S_5$ (%) when 5kg load is applied less than that of the carcass cord, i.e. between 3 and 6, or the divided value $D_5$ (%/d) of the stretch $S_5$ (%) divided by the actual total denier number (d) is between 3.85 x 10$^{-4}$ and 7.69 x 10$^{-4}$, the divided value $D_{10}$ of stretch $S_{10}$ (%) when 10kg load is applied divided by the actual total denier number (d) is between 6.41 x 10$^{-4}$ and 10.26 x 10$^{-4}$ the divided value $D_{20}$ (%d) of stretch $S_{20}$ (%) when 20kg load is applied divided by the actual total denier number d is between 10.26 x 10$^{-4}$ and 17.59 x 10$^{-4}$.

It is preferable to, use a relatively thick cord having the same diameter such as 1260 d/2 to 2700 d/3 for both the belt cord 6 and the carcass cord, a cord having the same diameter or a smaller diameter as the supplemental cord. More preferably the same cord as used for the belt cord should be employed in the supplemental cord.

Aromatic polyamide fibre cords may be used as the belt cords, and in such a case, the twist coefficient TN which the the product $T\sqrt{d}$ of the number of twists per 10cm and the square root of the total denier number (d) of the cord should be $2.466 \times 10^3$ or more and $3.036 \times 10^3$ or less in order to obtain the required high stretch.

In the case when the twist coefficient TN is less than $2.466 \times 10^3$, the stretchability of the belt cord become inferior, and the cornering performance is deteriorated, while in the case that it exceeds $3.036 \times 10^3$, as the stretchability of the belt cord becomes excessive the hoop effect is insufficient, separation of the belt layer 4 occurs, and the structural durability is deteriorated.

It is preferable to set the divided value of the elongation at breakage (%) divided by the actual total denier number of the cord, that is, the elongation rate a breakage E at $7.78 \times 10^{-4}$ to $12.22 \times 10^{-4}$.

If the elongation rate at breakage E is less than $7.78 \times 10^{-4}$, the stretch of the belt layer 4 is smaller even when inflated with an internal pressure, and the tyre's performance ins reducing the compressive stress acting in the tread and bead parts 14 when the tyre is deformed becomes inferior. Conversely, in the case where it exceeds $12.22 \times 10^{-4}$, the expansion and contraction of the belt layer 4 becomes larger and there is danger of causing separation at the edge of the belt layer 4.

For the topping rubber in which the belt cord is buried, a material that has the reinforcing and low heat-generating properties and yet allows the cord to realise its performance is employed.

For such a purpose, a base material comprising one or more types of natural rubber and artificial isoprene rubber is mixed with 50 to 70 parts by weight of carbon. Moreover, those having 30 to $70kg/cm^2$ in 100 modulus and 200% or more and 500% or less in elongation at breakage are preferably used. If the carbon content is less than 50 parts by weight, the reinforcing property is deteriorated, and if it exceeds 70 parts by weight, it tends to generate more heat. On the other hand, when the 100% modulus is less than $30kg/cm^2$, the heating property is increased, and when it exceeds $70kg/cm^2$, the reinforcing property is deteriorated. Also, in the case that the elongation at breakage is less than 200%, the ability to follow and adapt to strains of the carcass becomes insufficient, which tends to cause rubber breakage, and when it exceeds 500%, the tendency towards excessive heat generation increases.

Although a cord in which aromatic polyamide is employed has superior strength and stretchability, it has been a problem, conventionally, that the adhesion to topping rubber is inferior in comparison with nylon and aliphatic polyamide, which has been obstructing its utilisation.

However, it has come to be possible to obtain equivalent or stronger adhesion levels of aromatic polyamide to topping rubber in comparison with nylon, aliphatic polyamide or the like by finding an adhering method appropriate to aromatic polyamide, and thereby it has come to be possible to employ fibres composed of aromatic polyamide as the belt cords of the belt layer 4.

The adhering process of nylon or aliphatic polyamide to topping rubber is performed, as shown in Table 1, through the double-bathing or double dipping process. However, when an aromatic polyamide fibre is adhered to the topping rubber through the processing procedure, the adhesion remarkably deteriorates comparing with that of nylon or the like, which can not achieve the function as belt layer.

Therefore, by performing the first bathing process twice in succession, as shown in Table 2, and the second bathing process twice in succession as well as the first bathing process, an adhesion of belt cord to the topping rubber of 21.0kg/cm or more has been realised.

When the adhesion is less than 21.0kg/cm, there is a danger of causing a separation in high-speed rotation under heavy load and large deformation, and so it can not be employed as a high-speed tyre for heavy load on aircraft or the like.

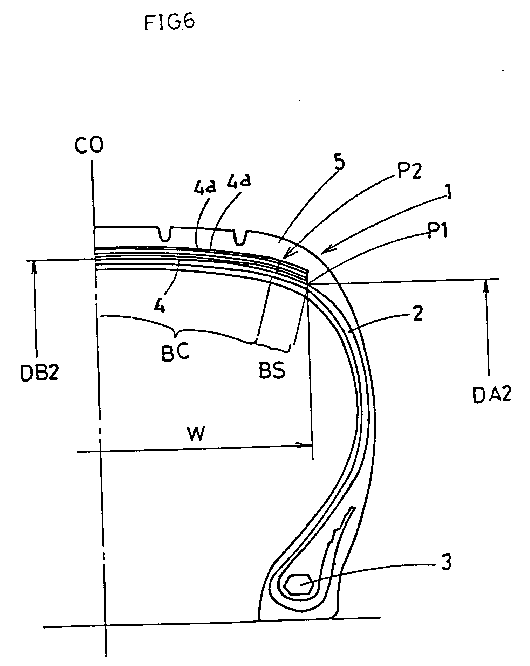

Figure 6 shows another embodiment of the belt layer 4 of the invention. Here belt plies 4a are composed of three parts which are a belt centre part BC having a butt joint near the point P2 where the curvature of belt layer 4 changes greatly and belt shoulder part BS.

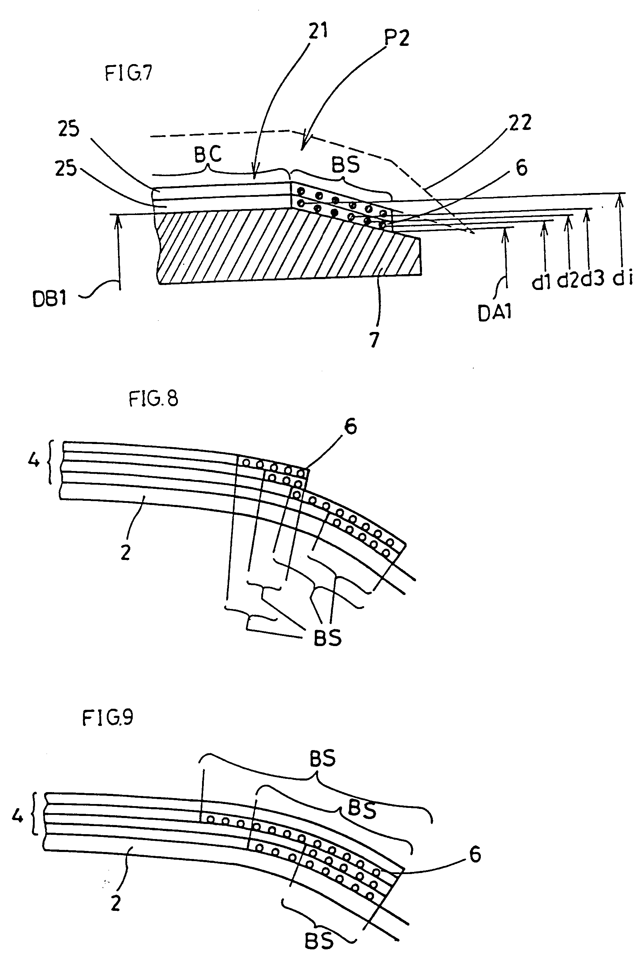

The belt centre part BC comprises a united sheet material 25 formed in the same manner as conventionally by cutting a fabric to the required width which is, as shown in Figure 7, winding it into a tube on a former 7 to form the central part of the raw belt 21.

The belt shoulder part BS comprises belt cords 6 which are spirally wound on to the former 7 with a homogeneous tension to have such length in the circumferential direction that corresponds to the inner diameter di in every part.

The belt cords 6 of parts BC and BS are parallel and aligned at an inclination of 5 degrees or less to the tyre's equator, and the inner diametral difference DB1-DA1 is set at 0.04 times to 0.3 times the belt width W. Also the ratio (DB1-DA1)/(DB2-DA2) is set at 0 to 2.0.

If the butt joint parts of parts BC and BS of the belt plies 4a are located at the same position, the rigidity of the belt layer 4 is rapidly changed, which affects unfavourably the durability and running performance. Therefore, as shown in Figures 8 and 9, the butt joint parts of the belt plies 4a are dispersed. When a cut breaker 16 is placed outside the belt ply 4a, asperities may be formed on the surface of the former 7, specifically on the surface of the tapered part to avoid slipping between the belt cord 6 and former 7.

As working examples prototypes having a tyre size of 46 x 17R20 and the structures as shown in Figure 1 were produced in the specifications shown in Table 3. In Table 3 (A) shows the type of ply structure used as given in Table 5. The tyres were inflated to a specified internal pressure, their durability was tested based on the taxi simulation test according to U S Federal Aviation Administration's Standard TSO-C62c, and the results are shown by figures and numbers in the Table. Number 61 shows that the tyre ran the complete distance. Tyres that could bear take-off and landing at 200% of load after the test are shown by a circle.

In addition, the temperature rise in the crown, shoulder parts and bead parts of tyres of the embodiment 2 and comparison examples 1 and 2 running at 100% load and at a speed of 300km/h was measured. The temperature after one hour was measured by inserting a thermocouple into the middle thickness position. Embodiment 2 showed lower temperatures in the bead part.

Moreover, the speed was measured for the critical speed of inducing standing waves. Tyres of the embodiments achieved approximately 300km/h. The results are shown by indices by setting the comparison example 1 at 100 points, and higher scores show more superior critical speeds.

Prototypes of tyres of embodiments 4 to 7 were produced using ply specification (B) to (E) shown in Table 5 as well, and the results of the same tests are listed.

A tyre of the present invention, thus, increases the belt tension in shoulder part, control the separation in end part caused by lifting, specifically increases the critical speed of inducing standing waves and significantly improves the durability of the bead parts.

Table 1

Raw fabric
⇓
First bathing
( Epoxy + latex)
⇓
Drying
⇓
Stretching
⇓
Normalizing
⇓
Second bathing
⇓ (RFL)
Drying
⇓
Stretching
⇓
Normalizing
⇓
Processed fabric

Table 2

Raw fabric
⇓
First bathing (First time)
( Epoxy + latex)
⇓
Drying
⇓
Stretching
⇓
Normalizing
⇓
First bathing (Second time)
( Epoxy + latex)
⇓
Drying
⇓
Stretching
⇓
Normalizing
⇓
Second bathing   (First time)
⇓ (RFL)
Drying
⇓
Stretching
⇓
Normalizing
⇓
Second bathing   (Second time)
⇓ (RFL)
Drying
⇓
Stretching
⇓
Normalizing
⇓
Processed fabric

Table 3

| | Embodiment 1 | Embodiment 2 | Embodiment 3 | Comparative example 1 | Comparative example 2 |
|---|---|---|---|---|---|
| Ply structure | A | A | A | A | A |
| Radius of curvature R1 mm<br>Radius of curvature R2 mm<br>Cord path mm<br>$\dfrac{DB1-DA1}{DB2-DA2}$ | 350<br>120<br>400<br>1.8 | 360<br>120<br>406<br>1.5 | 370<br>120<br>410<br>1.0 | 380<br>120<br>414<br>0.5 | 400<br>130<br>426<br>0.3 |
| Standing wave characteristic<br>Durability | 110<br>O | 110<br>O | 104<br>O | 100<br>61 | 93<br>61 |
| Temperature rise — Crown part<br>Shoulder part<br>Bead part | —<br>—<br>— | 79<br>71<br>70 | —<br>—<br>— | 80<br>72<br>73 | 88<br>55<br>78 |

Table 4

| | Embodiment 4 | Embodiment 5 | Embodiment 6 | Embodiment 7 |
|---|---|---|---|---|
| Ply structure | B | C | D | E |
| Radius of curvature R1 mm<br>Radius of curvature R2 mm<br>Cord path mm /2<br>$\dfrac{DB1-DA1}{DB2-DA2}$ | 360<br>120<br>406<br>1.8 | | | |
| Standing wave characteristic<br>Durability<br>Cornering force | 115<br>O<br>100 | 115<br>O<br>70 | 120<br>O<br>100 | 100<br>O<br>100 |

EP 0 415 684 B1

Table 5

| | | A | B | C | D | E |
|---|---|---|---|---|---|---|
| Carcass | Number of plies | 6 | 6 | 6 | 6 | 6 |
| | Material of cord | NYLON6,6 | NYLON6,6 | NYLON6,6 | NYLON6,6 | NYLON6,6 |
| | Structure of cord | 1890d/3 | 1890d/3 | 1890d/3 | 1890d/3 | 1890d/3 |
| | Actual total denier number d | 6300 | 6800 | 6800 | 7000 | 6150 |
| | Number of twists of cord (twists/100 mm) | 26 | 34 | 34 | 36 | 23 |
| | $S_5$ (%) | 6.2 | 7.7 | 7.7 | 8.0 | 4.5 |
| | $S_{10}$ (%) | 9.5 | 11.7 | 11.7 | 12.1 | 7.5 |
| | $S_{20}$ (%) | 14.7 | 17.5 | 17.5 | 18.3 | 11.2 |
| | $D_5$ (%/d) $\times 10^{-4}$ | 9.84 | 11.32 | 11.32 | 11.43 | 7.32 |
| | $D_{10}$ (%/d) $\times 10^{-4}$ | 15.08 | 17.20 | 17.20 | 17.29 | 12.20 |
| | $D_{20}$ (%/d) $\times 10^{-4}$ | 23.33 | 25.74 | 25.74 | 26.14 | 16.00 |
| | Elongation in breakage (%) | 24.8 | 26.8 | 26.8 | 27.2 | 19.6 |
| | Tension of cord (kg) | 48.2 | 43.8 | 43.8 | 42.5 | 54.0 |
| | Initial elasticity (kg/cm²) | 175 | 145 | 145 | 140 | 270 |
| Belt | Number of plies | 8 | 8 | 8 | 8 | 8 |
| | Material of cord | NYLON6,6 | NYLON6,6 | NYLON6,6 | NYLON6,6 | NYLON6,6 |
| | Structure of cord | 1680d/4 | 1680d/4 | 1680d/4 | 1680d/4 | 1680d/4 |
| | Actual total denier number d | 7800 | 7800 | 7800 | 7800 | 7400 |
| | $S_5$ (%) | 4.8 | 4.8 | 4.8 | 4.8 | 4.1 |
| | $S_{10}$ (%) | 8.2 | 8.2 | 8.2 | 8.2 | 6.8 |
| | $S_{20}$ (%) | 11.3 | 11.3 | 11.3 | 11.3 | 9.7 |
| | $D_5$ (%/d) $\times 10^{-4}$ | 6.15 | 6.15 | 6.15 | 6.15 | 5.54 |
| | $D_{10}$ (%/d) $\times 10^{-4}$ | 10.51 | 10.51 | 10.51 | 10.51 | 9.19 |
| | $D_{20}$ (%/d) $\times 10^{-4}$ | 14.49 | 14.49 | 14.49 | 14.49 | 13.11 |
| | Elongation in breakage (%) | 22.4 | 22.4 | 22.4 | 22.4 | 17.2 |
| | Tension of cord (kg) | 52.5 | 52.5 | 52.5 | 52.5 | 56.5 |
| | Initial elasticity (kg/cm²) | 234 | 234 | 234 | 234 | 320 |
| Cut breaker | Number of plies | 2 | 2 | 0 | 2 | 2 |
| | Material of cord | NYLON6,6 | NYLON6,6 | — | NYLON6,6 | NYLON6,6 |
| | Structure of cord | 1680d/4 | 1680d/4 | — | 1680d/4 | 1680d/4 |
| | Actual total denier number d | 7800 | 7800 | — | 7800 | 7400 |
| | $S_5$ (%) | 4.8 | 4.8 | — | 4.8 | 4.1 |
| | $S_{10}$ (%) | 8.2 | 8.2 | — | 8.2 | 6.8 |
| | $S_{20}$ (%) | 11.3 | 11.3 | — | 11.3 | 9.7 |
| | $D_5$ (%/d) $\times 10^{-4}$ | 6.15 | 6.15 | — | 6.15 | 5.54 |
| | $D_{10}$ (%/d) $\times 10^{-4}$ | 10.51 | 10.51 | — | 10.51 | 9.19 |
| | $D_{20}$ (%/d) $\times 10^{-4}$ | 14.49 | 14.49 | — | 14.49 | 13.11 |
| | Elongation in breakage (%) | 22.4 | 22.4 | — | 22.4 | 17.2 |
| | Tension of cord (kg) | 52.5 | 52.5 | — | 52.5 | 56.5 |
| | Initial elasticity (kg/cm²) | 234 | 234 | — | 234 | 320 |

**Claims**

1. A high speed tyre for heavy load comprising a carcass (2) composed of at least one carcass ply (2a) having carcass cords inclined at an angle of 75 to 90 degrees to the tyre's equator (CO) and extending from a tread (5) through sidewalls (13) and folded at each edge around a bead core (3) of a bead region (14), and a belt layer (4) composed of a plurality of belt plies (4a) having belt cords (6) inclined at an angle of 0 to 5 degrees to the tyres equator (CO) and disposed radially outside said carcass (2) characterised in that the difference between the raw belt middle diameter DBI, defined as the inner diameter of the unvulcanised raw belt layer at the tyre's equator (CO) on a former and the raw belt edge diameter DA1 defined as the inner diameter of the unvalcanised raw belt layer at its edge part on the former, that is, the inner diametral difference DB1-DA1 of the raw belt layer is positive; the inner diametral difference DB1-DA1 is 0.04 times to 0.3 times the belt width W which is a linear width of the belt layer (4) in the direction of the tyres axis; the difference between the belt middle diameter DB2 defined as the inner diameter of the belt layer (4) at the tyres equator (CO) in the state where a tyre formed through vulcanisation moulding using said raw belt layer is mounted on its specified rim and inflated with an internal pressure of 0.5 kg/cm$^2$ and the belt edge diameter DA2 defined as the inner diameter of the belt layer (4) at its edge part in said state, that is, the inner diametral difference DB2-DA2 of the belt layer is positive: and the ratio of the inner diametral difference DB1-DA1 to the inner diametral difference DB2-DA2, that is, (DB1-DA1)/(DB2 - DA2) is 0 to 2.0.

2.  A high speed tyre for heavy load according to claim 1 characterised in that the belt ply (4) is formed by continuously winding one or more belt cords (6) from one of the shoulder parts (BS) to the other in a spiral shape.

3.  A high speed tyre for heavy load according to claim 1 or 2 characterised in that the belt layer (4) has a cut breaker (16) of supplemental cords which is arranged inside or outside the belt plies (4a) in the radial direction at an angle of 5 degrees to 40 degrees to the tyres equator (CO)

4.  A high speed tyre for heavy load according to claim 1, 2 or 3 characterised in that the carcass cord has a stretch $S_5$ (%) at 5 kg load of 5 to 10.

5.  A high speed tyre for heavy load according to any of claims 1 to 3 characterised in that the carcass cord has a-stretch $S_5$ (%) at 5 kg load of 5 to 8.

6.  A high speed tyre for heavy load according to any of claims 1 to 5 characterised in that the carcass cord has a stretch $S_{10}$ (%) at 10 kg load of 9 to 15, and a stretch $S_{20}$ (%) at 20 kg load of 14 to 20.

7.  A high speed tyre for heavy load according to any of claims 1,2 or 3, characterised in that belt cord (6) has a stretch $S_5$ (%) of 5 kg load of 3 to 6.

8.  A high speed tyre for heavy load according to any of claims 1 to 7 characterised in that the carcass cord has a divided value $D_5$ (%/d) of stretch $S_5$ (%) at 5 kg load divided by the actual total denier number d of the cords of $7.35 \times 10^{-4}$ to $14.7 \times 10^{-4}$.

9.  A high speed tyre for heavy load according to any of claims 1 to 7 characterised in that the carcass cord has a divided value $D_{10}$ (%/d) of stretch $S_{10}$ (%) upon 10 kg loading divided by the actual total denier number d of the cords of $13.2 \times 10^{-4}$ to $22.1 \times 10^{-4}$, and a divided value $D_{20}$ (%/d) of stretch $S_{20}$ (%) upon 20 kg divided by the actual total denier number d of the cords $20.6 \times 10^{-4}$ to $29.4 \times 10^{-4}$.

10. A high speed tyre for heavy load according to any of claims 1 to 9 characterised in that the belt cord (6) has a divided value $D_5$ (%/d) of stretch $S_5$ (%) at 5 kg load divided by the actual total denier number d of the cords of $3.85 \times 10^{-4}$ to $7.69 \times 10^{-4}$.

11. A high speed tyre for heavy load according to any of claims 1 to 7 characterised in that the belt cord (6) has a divided value $D_{10}$ (%/d) of stretch $S_{10}$ (%) at 10 kg load divided by the actual total denier number d of the cords of $6.41 \times 10^{-4}$ to $10.26 \times 10^{-4}$, and the divided value $D_{20}$ /d of stretch $S_{20}$ (%) at 20 kg load divided by the actual total denier number d of the cords is $10.26 \times 10^{-4}$ to $17.59 \times 10^{-4}$.

12. A high speed tyre for heavy load according to any of claims 1 to 11 characterised in that the belt cord (6) is made of an aromatic polyamide, and the product T$\sqrt{d}$ which is the product of the twist number T per 10 cm of the belt cord and the square root of the actual total denier number d of the cords, that is, the twist coefficient TN is $2.466 \times 10^3$ to $3.036 \times 10^3$.

13. A high speed tyre for heavy load according to any of claims 1 to 12 characterised in that the divided value of elongation at breakage (%) of the belt cord (b) divided by the actual total denier number d of the cords, that is, the breakage elongation rate E is 7.78 x 10⁻⁴ or more and 12.22 x 10⁻⁴ or less.

14. A high speed tyre for heavy load according to any of claims 1 to 13 characterised in that the adhesion of the belt cords (6) to the topping rubber in which the belt cords (6) are buried is 21.0 kg/cm or more.

**Patentansprüche**

1. Hochgeschwindigkeits-Reifen für Schwerbelastung, welcher umfaßt eine Karkasse (2), die zusammengesetzt ist aus mindestens einer Karkasslage (2a) mit Karkasskorden, die mit einem Winkel von 75 bis 90° zum Reifenäquator (CO) geneigt sind und die sich von einem Laufstreifen (5) durch Seitenwände (13) erstreckt und an jeder Kante um einen Wulstkern (3) eines Wulstbereichs (14) gefaltet ist, und eine Gürtelschicht (4), die zusammengesetzt ist aus einer Vielzahl von Gürtellagen (4a) mit Gürtelkorden (6), die mit einem Winkel von 0 bis 5° zum Reifenäquator (CO) geneigt und radial außerhalb der Karkasse (2) angeordnet sind, dadurch gekennzeichnet, daß die Differenz zwischen dem mittleren Durchmesser DBI des Rohgürtels, definiert als der Innendurchmesser der unvulkanisierten Rohgürtelschicht am Reifenäquator (CO) an einem Former, und dem Rohgürtel-Kantendurchmesser DA1, definiert als der Innendurchmesser der unvulkanisierten Rohgürtelschicht an ihrem Kantenteil an dem Former, d.h. die innere Durchmesser-Differenz DB1-DA1 der Rohgürtelschicht, positiv ist; daß die innere Durchmesser-Differenz DB1-DA1 das 0,04-fache bis 0,3-fache der Gürtelbreite W beträgt, die eine lineare Breite der Gürtelschicht (4) in Richtung der Reifenachse ist; daß die Differenz zwischen dem mittleren Gürteldurchmesser DB2, definiert als der Innendurchmesser der Gürtelschicht (4) am Reifenäquator (CO) in den Zustand, bei dem ein durch Vulkanisierformen unter Benutzung der Rohgürtelschicht ausgebildeter Reifen auf seine angegebene Felge aufgezogen und mit einem Innendruck von 0,5 kp/cm² aufgepumpt ist, und dem Gürtelkanten-Durchmesser DA2, der als der Innendurchmesser der Gürtelschicht (4) an ihrem Kantenteil in diesem Zustand definiert ist, d.h. die Innendurchmesser-Differenz DB2-DA2, positiv ist; das Verhältnis der Innendurchmesser-Differenz DB1-DA1 zur Innendurchmesser-Differenz DB2-DA2, also (DB1-DA1)/(DB2-DA2) 0 bis 2,0 ist.

2. Hochgeschwindigkeits-Reifen für Schwerbelastung nach Anspruch 1, dadurch gekennzeichnet, daß die Gürtellage (4) gebildet ist durch kontinuierliches Wickeln in Wendelform von einem oder mehreren Gürtelkord(en) (6) von einem Schulterteil (BS) zum anderen.

3. Hochgeschwindigkeits-Reifen für Schwerbelastung nach Anspruch 1 oder 2, dadurch gekennzeichnet, daß die Gürtelschicht (4) eine Schneidkisseneinlage (16) aus Hilfskorden mit einem Winkel von 5° bis 60° zum Reifenäquator (CO) besitzt, die innerhalb und außerhalb der Gürtellagen (4) in Radialrichtung angeordnet ist.

4. Hochgeschwindigkeits-Reifen für Schwerbelastung nach Anspruch 1, 2 oder 3, dadurch gekennzeichnet, daß der Karkasskord eine Dehnung $S_5$ (%) bei 5 kp Belastung von 5 bis 10 aufweist.

5. Hochgeschwindigkeits-Reifen für Schwerbelastung nach einem der Ansprüche 1 bis 3, dadurch gekennzeichnet, daß der Karkasskord eine Dehnung $S_5$ (%) bei kp Belastung von 5 bis 8 aufweist.

6. Hochgeschwindigkeits-Reifen für Schwerbelastung nach einem der Ansprüche 1 bis 5, dadurch gekennzeichnet, daß der Karkasskord eine Dehnung $S_{10}$ (%) bei 10 kp Belastung von 9 bis 15 aufweist und eine Dehnung $S_{20}$ (%) bei 20 kp Belastung von 14 bis 20.

7. Hochgeschwindigkeits-Reifen für Schwerbelastung nach einem der Ansprüche 1, 2 oder 3, dadurch gekennzeichnet, daß der Gürtelkord (6) eine Dehnung $S_5$ ( % ) bei 5 kp Belastung von 3 bis 6 aufweist.

8. Hochgeschwindigkeits-Reifen für Schwerbelastung nach einem der Ansprüche 1 bis 7, dadurch gekennzeichnet, daß der Karkasskord einen unterteilten Wert $D_5$ (%/d) der Dehnung $S_5$ (%) bei 5 kp Belastung, geteilt durch die aktuelle Gesamtdenierzahl d der Korde, von 7,35 x 10⁻⁴ bis 14,7 x 10⁻⁴ aufweist.

9. Hochgeschwindigkeits-Reifen für Schwerbelastung nach einem der Ansprüche 1 bis 7, dadurch gekennzeichnet, daß der Karkasskord einen unterteilten Wert $D_{10}$ (%/d) der Dehnung $S_{10}$ (%) bei 10 kp Belastung, dividiert durch die aktuelle Gesamtdenierzahl d der Korde von 13,2 x 10⁻⁴ bis 22,1 x 10⁻⁴, und einen geteilten Wert $D_{20}$ (%/d) der Dehnung $S_{20}$ (%) bei 20 kp, geteilt durch die aktuelle Gesamtdenierzahl d der

EP 0 415 684 B1

Korde, von 20,6 x $10^{-4}$ bis 29,4 x $10^{-4}$ besitzt.

10. Hochgeschwindigkeits-Reifen für Schwerbelastung nach einem der Ansprüche 1 bis 9, dadurch gekennzeichnet, daß der Gürtelkord (6) einen geteilten Wert $D_5$ (%/d) der Dehnung $S_5$ (%) bei 5 kp Belastung, geteilt durch die aktuelle Gesamtdenierzahl d der Korde, von 3,85 x $10^{-4}$ bis 7,69 x $10^{-4}$ besitzt.

11. Hochgeschwindigkeits-Reifen für Schwerbelastung nach einem der Ansprüche 1 bis 7, dadurch gekennzeichnet, daß der Gürtelkord (6) einen unterteilten Wert $D_{10}$ (%/d) der Dehnung $S_10$ (%) bei 10 kp Belastung, geteilt durch die aktuelle Gesamtdenierzahl d der Korde, von 6,41 x $10^{-4}$ bis 10,26 x $10^{-4}$ besitzt und den unterteilten Wert $D_{20}$ (%/d) der Dehnung $S_{20}$ (%) bei 20 kp Belastung, geteilt durch die aktuelle Gesamtdenierzahl d der Korde, von 10,26 x $10^{-4}$ bis 17,59 x $10^{-4}$ besitzt.

12. Hochgeschwindigkeits-Reifen für Schwerbelastung nach einem der Ansprüche 1 bis 11, dadurch gekennzeichnet, daß der Gürtelkord (6) aus einem aromatischen Polyamid hergestellt ist und das Produkt T√d, das das Produkt der Verdrillungszahl T pro 10 cm des Gürtelkordes mit der Quadratwurzel der aktuellen Gesamtdenierzahl d der Korde ist, also der Verdrillungs-Koeffizient TN, 2,466 x $10^3$ bis 3,036 x $10^3$ beträgt.

13. Hochgeschwindigkeits-Reifen für Schwerbelastung nach einem der Ansprüche 1 bis 12, dadurch gekennzeichnet, daß der geteilte Wert der Bruchdehnung (%) der Gürtelkorde (6), geteilt durch die aktuelle Gesamtdenierzahl d der Korde, d.h. die Bruchdehnungsrate E, 7,78 x $10^{-4}$ oder mehr und 12,22 x $10^{-4}$ oder weniger beträgt.

14. Hochgeschwindigkeits-Reifen für Schwerbelastung nach einem der Ansprüche 1 bis 13, dadurch gekennzeichnet, daß die Adhäsion des Gürtelkordes (6) an dem Beschichtungsgummi, in den die Gürtelkorde (6) eingesenkt sind, 21,0 kp/cm oder mehr beträgt.


**Revendications**

1. Pneumatique pour vitesses élevées et lourdes charges, comprenant une carcasse (2) composée d'au moins une nappe (2a) ayant des câblés de carcasse inclinés d'un angle compris entre 75 et 90° par rapport à l'équateur du pneumatique (CO) et allant d'une bande de roulement (5) dans les flancs (13) pour se replier à chaque bord autour d'une tringle (3) d'une région de talon (14), et une couche de ceinture (4) composée de plusieurs nappes (4a) de ceinture ayant des câblés (6) inclinés d'un angle compris entre 0 et 5° par rapport à l'équateur (CO) du pneumatique et disposés radialement à l'extérieur de la carcasse (2), caractérisé en ce que la différence entre le diamètre moyen DB1 de la ceinture à l'état non vulcanisé, défini comme étant le diamètre interne de la couche de ceinture à l'état non vulcanisé à l'équateur du pneumatique (CO) sur un organe formateur, et le diamètre DA1 du bord de ceinture à l'état non vulcanisé, défini comme étant le diamètre interne de la couche de ceinture à l'état non vulcanisé dans sa partie de bord sur l'organe formateur, c'est-à-dire la différence de diamètres interne DB1 - DA1 de la couche de ceinture à l'état non vulcanisé, est positive, la différence de diamètres internes DB1 - DA1 est comprise entre 0,04 et 0,3 fois la largeur W de la ceinture qui est la largeur linéaire de la couche (4) de ceinture dans la direction de l'axe du pneumatique, la différence entre le diamètre moyen DB2 de la ceinture, défini comme étant le diamètre interne de la couche (4) de ceinture à l'équateur (CO) du pneumatique dans l'état dans lequel le pneumatique formé par moulage par vulcanisation à l'aide de la couche de ceinture à l'état non vulcanisé est monté sur une jante spécifiée et est gonflé à une pression interne de 0,5 kg/cm$^2$, et le diamètre DA2 du bord de ceinture, défini comme étant le diamètre interne de la couche (4) de ceinture dans sa partie de bord dans ledit état, c'est-à-dire la différence de diamètres internes DB2 - DA2 de la couche de ceinture, est positive, et le rapport de la différence de diamètres internes DB1 - DA1 à la différence de diamètres internes DB2 - DA2, c'est-à-dire (DB1 - DA1)/(DB2 - DA2) est compris entre 0 et 2,0.

2. Pneumatique pour vitesses élevées et lourdes charges selon la revendication 1, caractérisé en ce que la nappe (4) de ceinture est formée par enroulement continu d'un ou plusieurs câblés (6) de ceinture de l'une des parties d'épaulement (BS) vers l'autre sous forme spiralée.

3. Pneumatique pour vitesses élevées et lourdes charges selon la revendication 1 ou 2, caractérisé en ce que la couche de ceinture (4) a une nappe sommet coupée (16) formée de câblés supplémentaires qui sont disposés à l'intérieur ou à l'extérieur des nappes de ceinture (4a) dans la direction radiale avec un

13

angle compris entre 5 et 40° avec l'équateur du pneumatique (CO).

4. Pneumatique pour vitesses élevées et lourdes charges selon la revendication 1, 2 ou 3, caractérisé en ce que le câblé de carcasse a un allongement $S_5$ (%) pour une charge de 49 N (5 kg) compris entre 5 et 10.

5. Pneumatique pour vitesses élevées et lourdes charges selon l'une quelconque des revendications 1 à 3, caractérisé en ce que le câblé de carcasse a un allongement $S_5$ (%) sous une charge de 49 N (5 kg) compris entre 5 et 8.

6. Pneumatique pour vitesses élevées et lourdes charges selon l'une quelconque des revendications 1 à 5, caractérisé en ce que le câblé de carcasse a un allongement $S_{10}$ (%) pour une charge de 98 N (10 kg) compris entre 9 et 15, et un allongement $S_{20}$ (%) sous une charge de 196 N (20 kg) compris entre 14 et 20.

7. Pneumatique pour vitesses élevées et lourdes charges selon l'une quelconque des revendications 1, 2 et 3, caractérisé en ce que le câblé (6) de ceinture a un allongement $S_5$ (%) sous une charge de 49 N (5 kg) compris entre 3 et 6.

8. Pneumatique pour vitesses élevées et lourdes charges selon l'une quelconque des revendications 1 à 7, caractérisé en ce que le câblé de carcasse a une valeur $D_5$ (%/d) de l'allongement $S_5$ (%) sous une charge de 49 N (5 kg) divisé par le denier total réel d des câblés comprise entre $7,35.10^{-4}$ et $14,7.10^{-4}$.

9. Pneumatique pour vitesses élevées et lourdes charges selon l'une quelconque des revendications 1 à 7, caractérisé en ce que le câblé de carcasse a une valeur $D_{10}$ (%/d) de l'allongement $S_{10}$ (%) sous une charge de 98 N (10 kg) divisé par le denier total réel de des câblés comprise entre $13,2.10^{-4}$ et $22,1.10^{-4}$, et une valeur $D_{20}$ (%/d) de l'allongement $S_{20}$ (%) sous une charge de 196 N (20 kg) divisé par le denier total réel d des câblés comprise entre $20,6.10^{-4}$ et $29,4.10^{-4}$.

10. Pneumatique pour vitesses élevées et lourdes charges selon l'une quelconque des revendications 1 à 9, caractérisé en ce que le câblé (6) de ceinture a une valeur $D_5$ (%/d) de l'allongement $S_5$ (%) sous une charge de 49 N (5 kg) divisé par le denier total réel d des câblés comprise entre $3,85.10^{-4}$ et $7,69.10^{-4}$.

11. Pneumatique pour vitesses élevées et lourdes charges selon l'une quelconque des revendications 1 à 7, caractérisé en ce que le câblé (6) de ceinture a une valeur $D_{10}$ (%/d) de l'allongement $S_{10}$ (%) sous une charge de 98 N (10 kg) divisé par le denier total réel d des câblés comprise entre $6,41.10^{-4}$ et $10,26.10^{-4}$, et une valeur $D_{20}$ (M/d) de l'allongement $S_{20}$ (%) sous une charge de 196 N (20 kg) divisé par le denier total réel d des câblés est comprise entre $10,26.10^{-4}$ et $17,59.10^{-4}$.

12. Pneumatique pour vitesses élevées et lourdes charges selon l'une quelconque des revendications 1 à 11, caractérisé en ce que le câblé (6) de ceinture est formé d'un polyamide aromatique, et le produit $T\sqrt{d}$, qui est le produit du nombre T de torsions par fraction de 10 cm du câblé de ceinture et de la racine carrée du denier total réel des câblés, c'est-à-dire le coefficient de torsion TN, est compris entre $2,466.10^3$ et $3,036.10^3$.

13. Pneumatique pour vitesses élevées et lourdes charges selon l'une quelconque des revendications 1 à 12, caractérisé en ce que la valeur de l'allongement à la rupture (%) du câblé (6) de ceinture divisé par le denier total réel d des câblés, c'est-à-dire la vitesse d'allongement à la rupture E, est comprise entre $7,78.10^{-4}$ et $12,22.10^{-4}$.

14. Pneumatique pour vitesses élevées et lourdes charges selon l'une quelconque des revendications 1 à 13, caractérisé en ce que l'adhérence des câblés (6) de ceinture en caoutchouc d'enrobage dans lequel les câblés (6) de ceinture sont enrobés est supérieure ou égale à 21,0 kg/cm.

FIG.1

FIG.2

FIG.3

FIG.4(A)

FIG.4(B)

FIG.5

FIG.6

FIG.7

FIG.8

FIG.9